# EUROPÄISCHE PATENTSCHRIFT

(11) **EP 2 344 834 B1**
(45) Veröffentlichungstag und Bekanntmachung des Hinweises auf die Patenterteilung: **21.01.2015**
(21) Anmeldenummer: 09744156.2
(22) Anmeldetag: 02.11.2009
(51) Int. Cl.: F41H 5/04

(54) **DURCHDRINGUNGSHEMMENDES MATERIAL**
MATERIAL TO PREVENT PENETRATION
MATÉRIAU RÉTRACTANT LA TRAVERSÉE

(30) Priorität: 07.11.2008 EP 08168603
(43) Veröffentlichungstag der Anmeldung: 20.07.2011
(73) Patentinhaber: Teijin Aramid GmbH, 42103 Wuppertal (DE)
(72) Erfinder: BÖTTGER, Christian, 42897 Remscheid (DE); KRABBE, Jutta, 42105 Wuppertal (DE); HARTERT, Rüdiger, 42287 Wuppertal (DE)
(74) Vertreter: Heimann, Anette
(86) Internationale Anmeldenummer: PCT/EP2009/064446
(87) Internationale Veröffentlichungsnummer: WO 2010/052185

(56) Entgegenhaltungen:
- EP-A- 0 265 550
- WO-A-01/78975
- WO-A-02/075238
- WO-A-2008/130391
- US-A- 5 958 804

## Beschreibung

Die Erfindung betrifft ein durchdringungshemmendes Material.

Solche Materialien sind bekannt. Beispielsweise beschreibt die Druckschrift WO 02/075238, die als Ausgangspunkt für die vorliegende Erfindung angesehen wird, ein durchdringungshemmendes Material mit mindestens einer Doppellage eines Gewebes. Die Gewebelagen weisen dabei in Kett- und Schussrichtung unterschiedliche Faserarten auf. Im durchdringungshemmenden Material werden die beiden Gewebelagen so zueinander angeordnet, dass gleiche Faserarten quer zueinander verlaufen.

EP 0 265 550 A offenbart ein mehrschichtiges schusssicheres Gebilde, das aus mindestens zwei übereinander angeordneten Schichten besteht, von denen jede sich aus Aramidgarnen zusammensetzt. Die Garne mindestens einer Schicht sind gelegt und miteinander verbunden, und die Garne einer anderen Schicht sind gewebt.

Die Aufgabe der Erfindung ist ein durchdringungshemmendes Material bereitzustellen, das neben guten durchdringungshemmenden Eigenschaften auch gute Traumawerte liefert.

Gelöst wird die Aufgabe mit einem durchdringungshemmenden Material, umfassend mindestens eine erste Komponente, wobei die erste Komponente mindestens eine erste Lage mit einer ersten Fadengruppe und eine zweite Lage mit einer zweiten Fadengruppe aufweist, wobei die erste Fadengruppe in einer ersten Fadenausrichtung orientiert ist und die zweite Fadengruppe in einer zweiten Fadenausrichtung orientiert ist, wobei die erste Fadenausrichtung quer zu der zweiten Fadenausrichtung ist, und wobei das durchdringungshemmende Material mindestens eine zweite Komponente aufweist, wobei die zweite Komponente mindestens eine dritte Lage und eine vierte Lage aufweist, wobei die dritte Lage eine Gelegelage ist, die eine dritte Fadengruppe aufweist und die vierte Lage eine Gelegelage ist, die eine vierte Fadengruppe aufweist, wobei die dritte Fadengruppe in einer dritten Fadenausrichtung orientiert ist und die vierte Fadengruppe in einer vierten Fadenausrichtung orientiert ist, und wobei die dritte Fadenausrichtung quer zu der vierten Fadenausrichtung ist, wobei die dritte Fadenausrichtung einen ersten Winkel zu der ersten und zu der zweiten Fadenausrichtung bildet und die vierte Fadenausrichtung einen zweiten Winkel zu der ersten Fadenausrichtung und der zweiten Fadenausrichtung bilden, und wobei die dritte Fadengruppe und die vierte Fadengruppe über mindestens ein erstes Bindemittel miteinander verbunden sind, und wobei das erste Bindemittel ein textiles Bindemittel ist, und wobei die erste Fadengruppe und die zweite Fadengruppe durch ein zweites Bindemittel miteinander verbunden sind und bei dem die erste Komponente und die zweite Komponente durch ein drittes Bindemittel miteinander verbunden sind.

Unter einem durchdringungshemmenden Material soll ein geschosshemmendes und/oder ein stichhemmendes Material verstanden werden.

Unter einer Fadenausrichtung die quer zu einer anderen Fadenausrichtung ist, soll verstanden werden, dass die beiden Fadenausrichtungen einen Winkel von 70° bis 110°, bevorzugt 90° miteinander bilden.

Unter einer Verbindung mit einem textilen Bindemittel soll verstanden werden, dass die dritte Lage und die vierte Lage beispielsweise durch Verrascheln, durch Verweben durch Verwirken und/oder durch mindestens einen Faden (Versteppen, Vernähen) miteinander verbunden sind.

Unter dem Begriff "Faden" soll ein länglicher Körper verstanden werden, dessen Längsabmessung viel größer ist als dessen Querabmessungen Breite und Dicke. Entsprechend umfasst der Begriff "Faden" auch Fasern, wobei ein Faden aus einer Mehrzahl von Fasern oder durch eine Faser gebildet werden kann. Der Begriff "Faser" umfasst Monofilamente, Multifilamente, Stapelfasern, Bänder oder Streifen und sonstige Formen von gehackten, geschnittenen oder diskontinuierlichen Fasern und dergleichen mit regelmäßigen oder unregelmäßigen Querschnitten. Dabei umfasst der Begriff "Faser" auch jeweils mehrere der vorstehenden genannten Gebilde oder die Kombination davon.

Der erste Winkel, der durch die erste Fadengruppe und die dritte Fadengruppe beziehungsweise durch die zweite Fadengruppe und die dritte Fadengruppe gebildet wird, ist bevorzugt nicht kleiner als ± 10° und ganz besonders bevorzugt nicht 0°. Das bedeutet, dass bevorzugt die erste Fadengruppe nicht parallel zur dritten Fadengruppe liegt. Weiterhin bedeutet dies, dass die zweite Fadengruppe nicht parallel zur dritten Fadengruppe liegt.

Weiterhin bevorzugt ist der zweite Winkel, der durch die erste Fadengruppe und die vierte Fadengruppe beziehungsweise durch die zweite Fadengruppe und die vierte Fadengruppe gebildet wird, nicht kleiner als ± 10° und ganz besonders bevorzugt nicht 0°. Auch hier bedeutet dies, dass die erste und die vierte Fadengruppe beziehungsweise die zweite und die vierte Fadengruppe nicht parallel zueinander liegen.

Unter einer Gelegelage soll beispielsweise eine Lage aus unidirektional zueinander angeordneten Fäden verstanden werden. Die unidirektionalen Fäden innerhalb einer Lage liegen dabei bevorzugt im wesentlichen parallel zueinander innerhalb der Lage. Eine Gewebelage ist keine Gelegelage im Sinne der Erfindung.

Bevorzugt werden die dritte Lage und die vierte Lage, beziehungsweise die dritte Fadengruppe und die vierte Fadengruppe durch mindestens einen Faden und ganz besonders bevorzugt durch mindestens einen Wirkfaden miteinander verbunden.

Die erste Fadengruppe und die zweite Fadengruppe, beziehungsweise die erste und die zweite Lage, sind durch ein zweites Bindemittel miteinander verbunden.

Bevorzugt ist das zweite Bindemittel mindestens ein Faden und/oder ein adhäsives Material.

Die erste Komponente und die zweite Komponente sind durch ein drittes Bindemittel miteinander verbunden sind. Durch das dritte Bindemittel werden in vorteilhafter Weise die zweite Lage und die dritte Lage miteinander verbunden.

Das dritte Bindemittel kann bevorzugt ein adhäsives Material sein. Eine mögliche Ausführungsform eines solchen adhäsiven Materials besteht darin, dass eine Folie ein Klebegitter, ein Klebeweb oder ähnliche Strukturen verwendet werden können, wobei die Verklebung vollflächig oder auch nur punktuell erfolgen kann. Ein Klebegitter kann beispielsweise aus miteinander in Kontakt stehenden Fäden aus schmelzbarem Material oder aus Fäden, die von einem Kleber ummantelt wurden bestehen. In einer anderen Ausführungsform können die erste Komponente und die zweite Komponente durch Versteppen oder Vernähen miteinander verbunden sein.

Vorzugsweise sind die dritte Fadengruppe und die vierte Fadengruppe, also bevorzugt die dritte und die vierte Lage, zusätzlich mit einem vierten Bindemittel miteinander verbunden. Das vierte Bindemittel ist dabei bevorzugt ein adhäsives Material. Durch das vierte Bindemittel wird in vorteilhafter Weise die Verbindung der dritten Lage mit der vierten Lage verbessert.

Bevorzugt wird als adhäsives Material ein thermoplastisches, oder ein elastomeres oder ein duroplastisches Material verwendet. Es versteht sich, dass das durchdringungshemmende Material auch unterschiedliche adhäsive Materialien aufweisen kann.

Weiterhin bevorzugt können die Fäden, die als Bindemittel beziehungsweise als textiles Bindemittel verwendet werden, sogenannte Wirkfäden sein. Solche Wirkfäden können beispielsweise aus Fäden mit Fasern mit einer geringen Festigkeit bestehen, wobei die Fäden auch einen geringen Titer aufweisen können. Bevorzugt wird als Wirkfaden ein Polyesterfaden, wie beispielsweise Trevira® 710 mit einem Titer von 140 dtex, verwendet.

Das erste Bindemittel als textiles Bindemittel verbindet die dritte und die vierte Lage zu einer zweiten Komponente. Bevorzugt sind die dritte und die vierte Lage zusätzlich noch mit dem vierten Bindemittel miteinander verbunden. Das erste und das vierte Bindemittel wirkt dabei nur in der dritten und der vierten Lage. Mit dem zweiten Bindemittel werden bevorzugt die erste und die zweite Lage zu einer ersten Komponente miteinander verbunden. Das zweite Bindemittel wirkt nur in der ersten und der zweiten Lage. Mir dem dritten Bindemittel sind bevorzugt die erste und die zweite Komponente miteinander verbunden. Das dritte Bindemittel wirkt folglich nur zwischen der ersten und der zweiten Komponente, also nur zwischen der zweiten und der dritten Lage.

Vorzugsweise weist die erste Lage zusätzlich zur ersten Fadengruppe eine fünfte Fadengruppe auf.

In einer Ausführungsform des durchdringungshemmenden Materials ist die fünfte Fadengruppe mit der ersten Fadengruppe verwebt. Vorzugsweise weist ein solches Gewebe die erste Fadengruppe mit 3,5 bis 20 Fäden/cm auf, wobei die erste Fadengruppe etwa 65% des Gewichts der Gewebelage ausmacht und die Kettfäden bildet. Die fünfte Fadengruppe kann beispielsweise mit 0,5 bis 16 Fäden/cm im Gewebe vorliegen und die Schussfäden bilden. In einem solchen Gewebe kann die erste Fadengruppe einen Titer von mindestens 200 dtex und die fünfte Fadengruppe einen Titer von mindestens 50 dtex aufweisen. Bezüglich des Aufbaus eines solchen Gewebes soll auf die Druckschrift WO 02/075238 verwiesen werden, die hiermit als Referenz eingeführt wird.

In einer anderen Ausführungsform des durchdringungshemmenden Materials ist die fünfte Fadengruppe auch mit der ersten Fadengruppe verwebt, die fünfte Fadengruppe und die erste Fadengruppe liegen jedoch in etwa mit der gleichen Anzahl Fäden/cm im Gewebe vor und weisen den gleichen Titer auf. Das Gewebe kann beispielsweise eine Leinwand 1/1 Bindung, ein Flächengewicht von 200 g/m² und eine Fadenzahl pro cm von 10,5 in Kett- und Schussrichtung aufweisen und aus Garnen mit einem Titer von 930 dtex bestehen, wobei die erste Fadengruppe die Kettfäden und die fünfte Fadengruppe die Schussfäden bilden. Solche Gewebe werden unter der Bezeichnung Twaron® CT 709 von der Firma Teijin Aramid vertrieben.

Weiterhin bevorzugt weist die zweite Lage zusätzlich zur zweiten Fadengruppe eine sechste Fadengruppe auf. Die sechste Fadengruppe ist bevorzugt mit der zweiten Fadengruppe verwebt. Bei einem Gewebe aus zweiter Fadengruppe und sechster Fadengruppe kann bevorzugt die zweite Fadengruppe die Schussfäden und die sechste Fadengruppe die Kettfäden bilden. Vorzugsweise weist ein solches Gewebe die zweite Fadengruppe mit 3,5 bis 20 Fäden/cm auf, wobei die zweite Fadengruppe etwa 65% des Gewichts der Gewebelage ausmacht. Die sechste Fadengruppe kann beispielsweise mit 0,5 bis 16 Fäden/cm im Gewebe vorliegen. In einem solchen Gewebe kann die zweite Fadengruppe einen Titer von mindestens 200 dtex und die sechste Fadengruppe einen Titer von mindestens 50 dtex aufweisen. Bezüglich eines solchen Gewebes soll auf die Druckschrift WO 02/075238 verwiesen werden.

Alternativ kann ein Gewebe, gebildet aus der zweiten und sechsten Fadengruppe, auch einen Aufbau aufweisen wie das Gewebe unter der Bezeichnung Twaron® CT 709.

Bevorzugt ist die erste Fadengruppe, die zweite Fadengruppe, die dritte Fadengruppe und die vierte Fadengruppe ausgewählt aus Aramid-, Polyethhylen-Polypropylen-, und Poly-p-phenylenbenzobisoxazol- (PBO) Fasern.

Weiterhin bevorzugt ist die fünfte Fadengruppe und die sechste Fadengruppe ausgewählt aus Polyester-, Polyethylen-, Polypropylen-, Aramid-, Polyamid-, Glas- und Poly-p-phenylenbenzobisoaxazol- Fasern.

Die genannten Fadengruppen können dabei auch ausgewählt sein aus aromatischen Polyesterfäden.

Bevorzugt weisen die erste Fadengruppe, die zweite Fadengruppe, die dritte Fadengruppe und die vierte Fadengruppe Fäden mit einem Titer von größer 200 dtex auf und die fünfte Fadengruppe und die sechste Fadengruppe weisen bevorzugt Fäden mit einem Titer von größer 50 dtex auf. Bevorzugt weisen die erste Fadengruppe, die zweite Fadengruppe, die dritte Fadengruppe und die vierte Fadengruppe einen Titer von 210 bis 6720, bevorzugter zwischen 420 und 3360 dtex, noch mehr bevorzugt zwischen 420 und 1680 dtex und am meisten bevorzugt zwischen ca. 840 und 1100 dtex auf. Für den Titer der fünften Fadengruppe und der sechsten Fadengruppe kann ein Wert von mindestens ca. 50 dtex, bevorzugter zwischen 50 und 280 dtex und am meisten bevorzugt zwischen 80 und 140 dtex gewählt werden.

In einer anderen bevorzugten Ausführungsform weist die erste Fadengruppe, die zweite Fadengruppe, die dritte Fadengruppe, die vierte Fadengruppe, die fünfte Fadengruppe und die sechste Fadengruppe Fäden mit einem Titer größer 200 dtex auf. Bevorzugt liegt der Titer der eben genannten Fadengruppen zwischen 210 bis 6720 dtex, bevorzugter zwischen 420 und 3360 dtex, noch mehr bevorzugt zwischen 420 und 1680 dtex und am meisten bevorzugt zwischen ca. 840 und 1100 dtex.

Vorzugsweise ist die fünfte Fadengruppe in einer fünften Fadenausrichtung orientiert. Bevorzugt ist die fünfte Fadenausrichtung parallel zur zweiten Fadenausrichtung. Weiterhin bevorzugt ist die fünfte Fadenausrichtung quer zur ersten Fadenausrichtung.

Bevorzugt ist die sechste Fadengruppe in einer sechsten Fadenausrichtung orientiert. Die sechste Fadenausrichtung ist dabei bevorzugt parallel zur ersten Fadenausrichtung. Weiterhin bevorzugt ist die sechste Fadenausrichtung quer zur zweiten Fadenausrichtung.

In einer Ausführungsform bestehen die erste Fadengruppe, die zweite Fadengruppe, die dritte Fadengruppe und die vierte Fadengruppe aus Aramidfäden und die fünfte Fadengruppe und die sechste Fadengruppe bestehen bevorzugt aus Polyesterfäden. Besonders bevorzugt bestehen die Aramidfäden aus Para-Aramid und ganz besonders bevorzugt aus Poly- paraphenylen terephthalamid.

Weiterhin bevorzugt beträgt der erste Winkel, der gebildet wird durch die dritte Fadenausrichtung der dritten Fadengruppe und der ersten oder der zweiten Fadenausrichtung der ersten beziehungsweise zweiten Fadengruppe, ± 30° bis ± 60°, ganz besonders bevorzugt ± 45°.

Bevorzugt beträgt der zweite Winkel, der gebildet wird durch die vierte Fadenausrichtung der vierten Fadengruppe und der ersten oder zweiten Fadenausrichtung der ersten beziehungsweise zweiten Fadengruppe, ± 30° bis ± 60°, ganz besonders bevorzugt ± 45°.

In einer besonders bevorzugten Ausführungsform der Erfindung weist das durchdringungshemmende Material mindestens eine Doppellage Gewebe auf, wobei diese Doppellage eine erste Lage umfasst, die aus einer ersten Fadengruppe mit 3,5 bis 20 Fäden/cm mit einem Titer von mindestens 210 dtex, die mindestens 65 % des Gewichts dieser Gewebelage ausmacht, und aus einer fünften Fadengruppe mit 0,5 bis 16 Fäden/cm mit einem Titer von mindestens 50 dtex besteht. Die fünfte Fadengruppe verläuft dabei bevorzugt quer zur ersten Fadengruppe und das Verhältnis von Anzahl Fäden/cm der ersten Fadengruppe zu Anzahl Fäden/cm der fünften Fadengruppe ist > 1. Weiterhin umfasst das durchdringungshemmende Material bevorzugt eine zweite Lage, die aus einer sechsten Fadengruppe mit 0,5 bis 16 Fäden/cm und einem Titer von mindestens 50 dtex und aus einer zweiten Fadengruppe mit 3,5 bis 20 Fäden/cm und einem Titer von mindestens 210 dtex besteht, wobei die zweite Fadengruppe mindestens 65 % des Gewichts dieser Gewebelage ausmacht. Die zweite Fadengruppe der zweiten Lage verläuft quer zur sechsten Fadengruppe und das Verhältnis von Anzahl Fäden/cm der zweiten Fadengruppe zu Anzahl Fäden/cm der sechsten Fadengruppe ist > 1. Die erste Fadengruppe der ersten Lage verläuft zur sechsten Fadengruppe der zweiten Lage parallel und die zweite Fadengruppe der zweiten Lage läuft parallel zur fünften Fadengruppe der ersten Lage, wobei das durchdringungshemmende Material wenigstens eine dritte Fadengruppe mit 3,5 bis 20 Fäden/cm mit einem Titer von mindestens 210 dtex in einer dritten Lage und eine vierte Fadengruppe mit 3,5 bis 20 Fäden/cm mit einem Titer von mindestens 210 dtex in einer vierten Lage aufweist. Die Fäden in der dritten Lage liegen in unidirektionaler und zueinander paralleler dritter Fadenausrichtung vor und die Fäden in der vierten Lage liegen in unidirektionaler und zueinander paralleler vierter Fadenausrichtung vor. Die dritte Fadenausrichtung und die vierte Fadenausrichtung sind unterschiedlich, wobei die dritte Fadenausrichtung unterschiedlich ist zu einer ersten Fadenausrichtung der Fäden der ersten Fadengruppe der ersten Lage und von einer zweiten Fadenausrichtung der Fäden der zweiten Fadengruppe der zweiten Lage. Die vierte Fadenausrichtung ist zudem unterschiedlich zu der ersten Fadenausrichtung der Fäden der ersten Fadengruppe der ersten Lage und von der zweiten Fadenausrichtung der Fäden der zweiten Fadengruppe der zweiten Lage.

Vorzugsweise sind in dieser Ausführungsform die erste Fadengruppe der ersten Lage sowie die sechste Fadengruppe der zweiten Lage Kettfäden und die fünfte Fadengruppe der ersten Lage sowie die zweite Fadengruppe der zweiten Lage Schussfäden.

Weist das durchdringungshemmende Material als erste Lage eine Gewebelage aus einer ersten und einer fünften Fadengruppe und als zweite Lage eine Gewebelage aus einer zweiten und fünften Fadengruppe auf, so weist die erste Lage bevorzugt Twaron® in Kettrichtung und Trevira® in Schussrichtung auf. Weiterhin bevorzugt weist die zweite Lage Twaron® in Schussrichtung und Trevira® in Kettrichtung auf.

Ein durchdringungshemmendes Material mit zwei Gewebelagen in der ersten Komponente und einer dritten und vierten Lage in der zweiten Komponente kann wie folgt hergestellt werden:

Zwischen zwei Lagen (Gelegelagen) (dritte Lage und vierte Lage) aus unidirektional und parallel zueinander angeordnete Twaron® Fäden (Typ 2040 930 dtex f1000) wird ein thermoplastischer Film aus Polyethylenfolie (LDPE) mit einer Dicke von 11 µm gelegt. Die dritte und vierte Lage sind so zueinander ausgerichtet, dass eine dritte Fadenausrichtung der dritten Lage und eine vierte Fadenausrichtung der vierten Lage einen Winkel von 90° bilden. Die dritte Lage, die vierte Lage und der Film werden mittels Wirkfäden miteinander verbunden. Die dritte und die vierte Fadengruppe, beziehungsweise die dritte und die vierte Lage, können durch Stabilisierungsfäden stabilisiert werden. Die Stabilisierungsfäden können dabei parallel zur einer noch nicht vorliegenden ersten Fadenrichtung (erste Lage) verlaufen. Als Stabilisierungsfäden können beispielweise Twaron®-Fäden (Typ 2040 930 dtex f1000) verwendet werden. Die dritte Lage, die vierte Lage, der thermoplastische Film, die Wirkfäden und die Stabilisierungsfäden bilden die zweite Komponente.

Die erste Komponente wird gebildet indem zwei Gewebelagen aufeinander gelegt werden. Die erste Gewebelage (erste Lage) weist Twaron® (Typ 2040 930 dtex f1000) in Kettrichtung und Trevira® (710, 140 dtex, Hoechst) in Schussrichtung auf. Die Twaron®-Fäden bilden in der ersten Lage die erste Fadengruppe und die Trevira®-Fäden bilden die fünfte Fadengruppe. Die zweite Gewebelage (zweite Lage) weist Twaron® (Typ 2040 930 dtex f1000) in Schussrichtung und Trevira® (710,140 dtex, Hoechst) in Kettrichtung auf, wobei die Twaron®-Fäden die zweite Fadengruppe und die Trevira®-Fäden die sechste Fadengruppe bilden. Zwischen den beiden Gewebelagen wird ein thermoplastischer Film aus Polyethylenfolie (LDPE) mit einer Dicke von 11 µm gelegt. Die Twaron®-Fäden der ersten und zweiten Gewebelage bilden einen Winkel von 90° miteinander. Die erste Gewebelage, die zweite Gewebelage und der thermoplastische Film zwischen den Gewebelagen bilden die erste Komponente.

Zur Verbindung der ersten Komponente und der zweiten Komponente wird ein thermoplastischer Film aus Polyethylenfolie (LDPE) mit einer Dicke von 11 µm zwischen die erste und die zweite Komponente, also zwischen die zweite und die dritte Lage gelegt. Alternativ hierzu kann auch ein Klebegitter oder ein Klebeweb aus mit Klebstoff ummantelte Fäden zwischen die erste und die zweite Komponente gelegt werden, wobei bevorzugt die Verbindung zwischen der ersten und der zweiten Komponente dann nur punktuell erfolgt. Auf die erste Lage und unter die vierte Lage wird zudem ein thermoplastischer Film aus Polyethylenfolie (LDPE) mit einer Dicke von 11 µm gelegt. Die erste Komponente wird so auf die zweite Komponente gelegt, dass die dritte Fadenausrichtung in etwa in einem Winkel von +45° zur ersten Fadenausrichtung und die vierte Fadenausrichtung in etwa in einem Winkel von -45° zur ersten Fadenausrichtung ist.

Eine Mehrzahl so gebildeter Kombinationen aus erster und zweiter Komponente mit Polyethylenfilmen (oder Klebegitter, Klebeweb) werden aufeinandergestapelt, wobei jede Kombination (erste und zweite Komponente) mittels Trennpapier von einer nachfolgenden Kombination getrennt wird. Es folgt eine Verpressung bei etwa 25 bar, einer Temperatur von 120 °C bis 180 C° in einer statischen Presse für etwa 25 Minuten, wobei anschließend die Heizung der Presse ausgeschaltet wird. Der thermoplastische Film (und eventuell das Klebegitter, Klebeweb) schmilzt dabei auf. Bevorzugt reicht ein einziger Verpressvorgang aus, um aus den mindestens vier Lagen mit Film ein durchdringungshemmendes Material herzustellen.

Bei einem durchdringungshemmenden Material, hergestellt ohne Gewebelagen, erfolgt der Aufbau analog zur Variante mit Gewebelagen, jedoch weisen die erste Lage und die zweite Lage eine erste beziehungsweise eine zweite Fadengruppe (Twaron® Typ 2000, 1100 dtex, f1000 Flächengewicht 45g/m²) auf, die parallel und unidirektional innerhalb der jeweiligen Lage angeordnet sind. In einer Ausführungsform wird dabei die erste Lage nur durch die erste Fadengruppe und die zweite Lage nur durch die zweite Fadengruppe gebildet. Denkbar ist aber auch, dass die erste Lage zusätzlich zur ersten Fadengruppe eine fünfte Fadengruppe (Twaron® Type 2000, 1100 dtex, f1000 Flächengewicht 45g/m²) aufweist, die auf der ersten Fadengruppe aufliegt, wobei die fünfte Fadengruppe quer zur ersten Fadengruppe orientiert ist. Die fünfte und die erste Fadengruppe bilden in diesem Fall eine erste Lage. Weiterhin kann die zweite Lage zusätzlich zur zweiten Fadengruppe eine sechste Fadengruppe (Twaron® Type 2000, 1100 dtex, f1000 Flächengewicht 45g/m²) aufweisen, die auf der zweiten Fadengruppe aufliegt. Die sechste Fadengruppe kann dabei quer zur zweiten Fadengruppe verlaufen und mit dieser zusammen die zweite Lage bilden. In beiden Fällen ist die zweite Lage innerhalb des durchdringungshemmenden Materials so angeordnet, dass die zweite Fadenausrichtung etwa in einem 90° Winkel zur der ersten Fadenausrichtung ist. Die erste Lage und die zweite Lage mit den entsprechenden Fadengruppen werden über ein Matrixmaterial miteinander verbunden. Die im Ausführungsbeispiel so gebildete erste Komponente weist zusätzlich auf den Außenlagen eine Folie auf. Eine so hergestellte erste Komponente wird beispielsweise als Twaron® LFT GF4 von der Firma Teijin Aramid hergestellt. Die dritte Lage wird innerhalb des durchdringungshemmenden Materials so angeordnet, dass die dritte Fadenausrichtung in etwa in einem Winkel von +45° zur ersten Fadenausrichtung ist. Die vierte Lage wird in dem durchdringungshemmenden Material so angeordnet, dass die vierte Fadenausrichtung in etwa in einem Winkel von -45° zur ersten Fadenausrichtung ist.

Es versteht sich, dass in einem durchdringungshemmenden Paket eine Mehrzahl von Einheiten des erfindungsgemäßen durchdringungshemmenden Materials aus jeweils der ersten und zweiten Komponenten verwendet werden können. Weiterhin können zusätzliche Lagen in einem solchen Paket vorgesehen sein. Beispielsweise kann ein durchdringungshemmendes Paket aus einer Mehrzahl von Gewebelagen, wie sie zum Beispiel für den Aufbau der ersten Komponente verwendet werden können, und einer Mehrzahl von ersten und zweiten Komponenten bestehen. Es ist auch denkbar, dass die Anordnung der ersten und zweiten Komponente alternierend erfolgt, das heißt das zunächst eine Kombination erste Komponente, zweite Komponente und dann eine Kombination zweite Komponente, erste Komponente aufeinander gelegt werden, wobei die ersten und zweiten Komponenten einer Kombination jeweils miteinander verbunden sind.

Das durchdringungshemmende Material kann beispielsweise in Schutzwesten, Helmen oder durchdringungshemmenden Platten verwendet werden.

Die Erfindung wird nachfolgend mittels Figuren und einem Beispiel näher beschrieben.

### Figuren

- Figur 1: stellt schematisch eine Explosionsdarstellung einer ersten Ausführungsform des durchdringungshemmenden Materials dar.
- Figur 2: stellt schematisch eine Explosionsdarstellung einer zweiten Ausführungsform des durchdringungshemmenden Materials dar.
- Figur 3: stellt schematisch eine Detaildarstellung aus Figur 1 dar.
- Figur 4: stellt schematisch die Anordnung verschiedener Fadengruppen im durchdringungshemmenden Material dar.

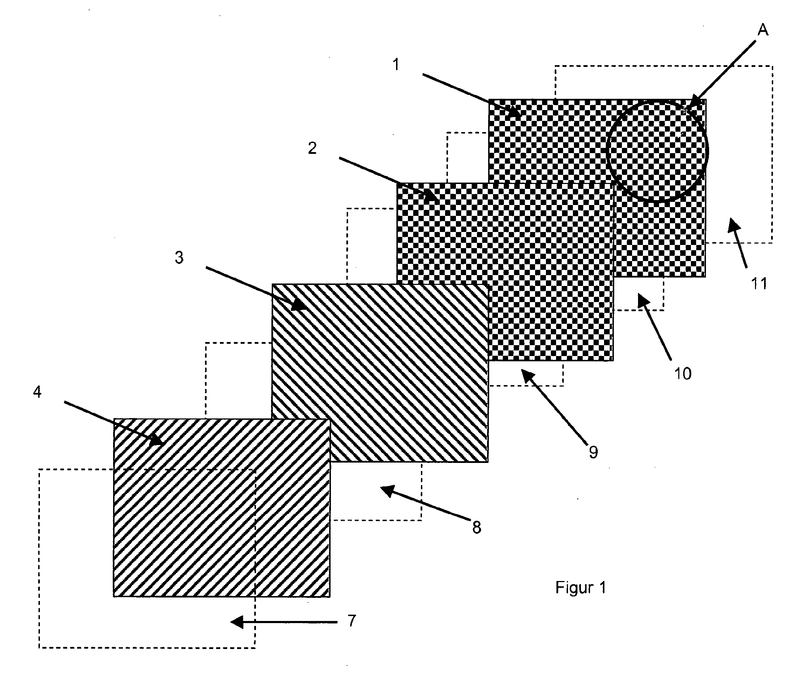

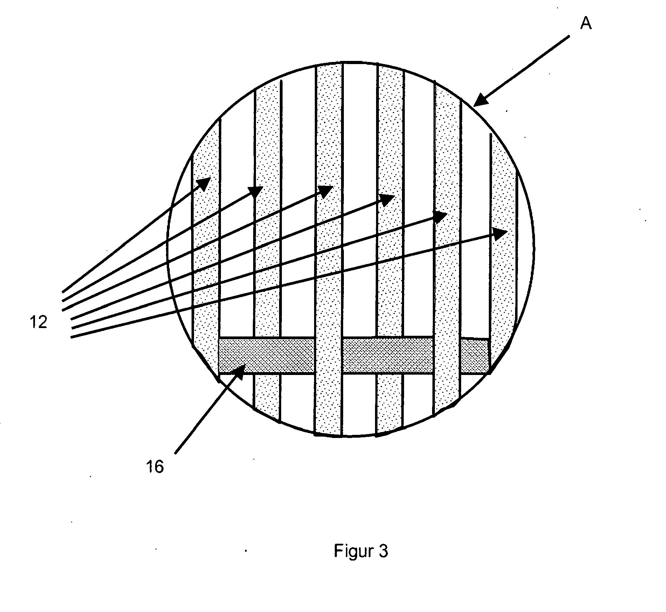

In Figur 1 ist schematisch eine Explosionsdarstellung einer ersten Ausführungsform eines durchdringungshemmenden Materials dargestellt. Das Material besteht im Ausführungsbeispiel aus einer ersten Lage 1, einer zweiten Lage 2, einer dritten Lage 3 und einer vierten Lage 4. Die erste und zweite Lage 1,2 bilden zusammen mit einem thermoplastischen Film 10 eine erste Komponente des durchdringungshemmenden Materials. Die dritte und vierte Lage 3, 4 bilden zusammen mit einem thermoplastischen Film 8, einem ersten textilen Bindemittel und Stabilisierungsfäden eine zweite Komponente des durchdringungshemmenden Materials. Im Beispiel der Figur 1 besteht die erste Lage 1 und die zweite Lage 2 aus einem Gewebe. Ein Teilbereich A des Gewebeaufbaus ist in Figur 3 vergrößert dargestellt. Die dritte Lage 3 und die vierte Lage 4 bestehen aus innerhalb der Lagen unidirektional und parallel zueinander angeordneten Fäden oder Fasern, das heißt, die dritte Lage 3 ist eine Gelegelage und die vierte Lage 4 ist eine Gelegelage. Die dritte und vierte Lage 3, 4 werden mittels des ersten textilen Bindemittels (nicht dargestellt) miteinander verbunden, wobei im Ausführungsbeispiel noch ein zusätzliches viertes Bindemittel 8 verwendet wird. Das vierte Bindemittel 8 ist im Ausführungsbeispiel der thermoplastische Film 8. Zur Verbindung der ersten und zweiten Lage 1, 2 wird ein zweites Bindemittel 10 verwendet, wobei das zweite Bindemittel 10 im Ausführungsbeispiel der thermoplastische Film 10 ist. Die erste Komponente und die zweite Komponente des durchdringungshemmenden Materials werden mittels eines dritten Bindemittels 9 miteinander verbunden. Das dritte Bindemittel 9 kann beispielsweise ein thermoplastischer Film (beispielsweise für einen vollflächigen Kontakt) oder ein Klebegitter (für einen punktuellen Kontakt) sein. Außen auf die erste Lage 1 und die vierte Lage 4 kann zudem eine Außenlage 7, 11 vorgesehen sein, wobei die Außenlage 7,11 beispielsweise ein thermoplastischer Film ist.

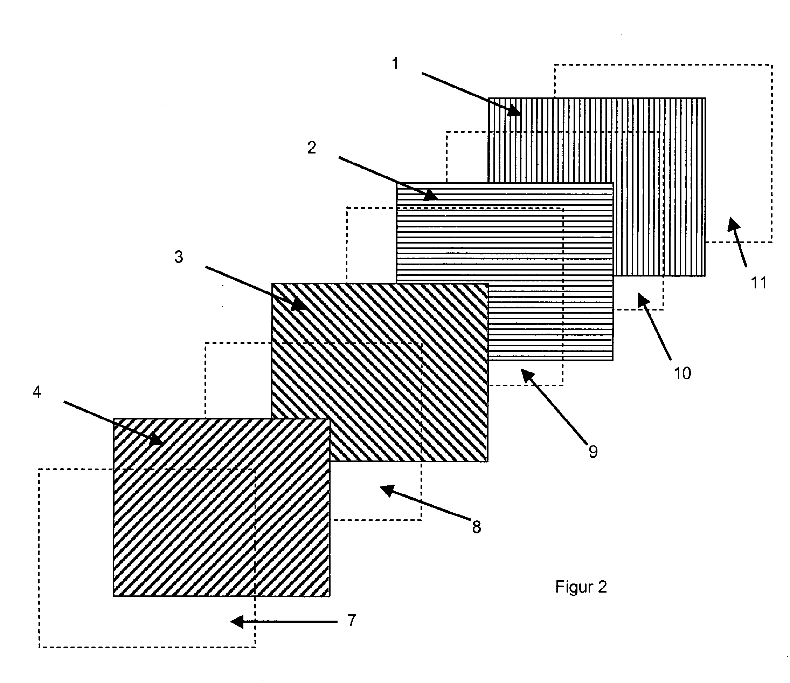

In Figur 2 ist schematisch eine Explosionsdarstellung einer zweiten Ausführungsform eines durchdringungshemmenden Materials dargestellt. Die zweite Ausführungsform unterscheidet sich von der ersten Ausführungsform dadurch, dass als erste und als zweite Lage 1, 2 kein Gewebe verwendet wird. Die erste Lage 1 wird durch eine erste Fadengruppe 12 (in Figur 2 nicht bezeichnet) und die zweite Lage 2 durch die zweite Fadengruppe 13 (in Figur 2 nicht bezeichnet) gebildet, wobei die erste und die zweite Fadengruppe 12, 13 aus Fasern beziehungsweise Fäden gebildet werden. Die Fäden oder die Fasern der ersten und zweiten Lage 1, 2 verlaufen in der jeweiligen Lage parallel und unidirektional zueinander. Bei dem durchdringungshemmenden Material gemäß der Figur 2 sind die dritte Lage 3 und die vierte Lage 4 gleich wie im Ausführungsbeispiel der Figur 1 aufgebaut. Auch die Verwendung von thermoplastischem Film als viertes, zweites und drittes Bindemittel 8, 10, 9 sowie als Außenlage 11 und 7 kann bei dem Ausführungsbeispiel gemäß der Figur 2 Verwendung finden. Sowohl im Ausführungsbeispiel der Figur 1 als auch im Ausführungsbeispiel der Figur 2 kann das durchdringungshemmende Material eine Mehrzahl von ersten Lagen 1, zweiten Lagen 2, dritten Lagen 3 und/oder vierten Lagen 4 aufweisen. Gleiche Lagen können dabei auch direkt hintereinander im durchdringungshemmenden Material angeordnet werden.

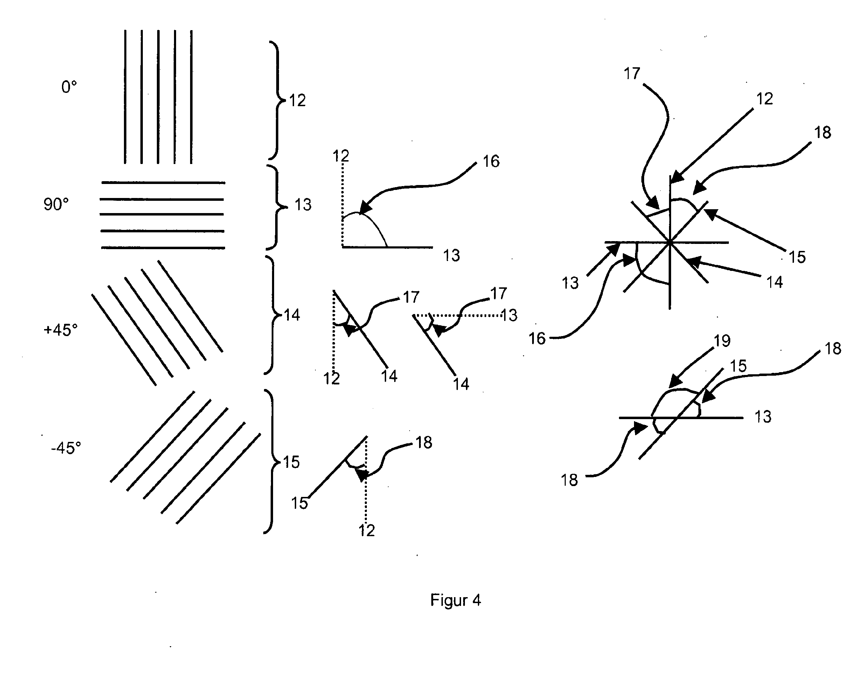

In der Figur 3 ist schematisch der Teilbereich A aus Figur 1 vergrößert dargestellt. Der Teilbereich A stellt dabei ein Teilbereich des Gewebes dar, das die erste Lage 1 bildet. Die Gewebelage (beziehungsweise die erste Lage 1) besteht aus einer ersten Fadengruppe 12 und einer fünften Fadengruppe 16, die miteinander verwebt sind. Die erste Fadengruppe 12 stellt die Kettfäden des Gewebes dar, wobei die Kettfäden beispielsweise aus Fasern oder Fäden aus hochfesten Aramid sind. Die fünfte Fadengruppe 16 stellt die Schussfäden des Gewebes dar, wobei beispielsweise Polyester wie Trevira® als Material für die fünfte Fadengruppe 16 verwendet werden kann. In einer bevorzugten Ausführungsform der Erfindung ist die zweite Lage 2 auch aus einem Gewebe aufgebaut, wobei das Gewebe als zweite Fadengruppe 13 (dargestellt in Figur 4) in Schussrichtung bevorzugt Fasern oder Fäden aus hochfesten Aramid aufweist. In Kettrichtung weist die zweite Lage 2 bevorzugt Polyesterfäden auf.

In der Figur 4 ist schematisch dargestellt, welche Fadenausrichtungen die Fadengruppen der verschiedenen Lagen zueinander haben können. In der ersten Lage 1 hat die erste Fadengruppe 12 eine vertikale erste Fadenausrichtung (0°). Die zweite Fadengruppe 13 in der zweiten Lage 2 weist eine zweite Fadenausrichtung auf, die im wesentlichen senkrecht zur ersten Fadenausrichtung sein soll (90°). Eine dritte Fadengruppe 14 bildet die dritte Lage, wobei die dritte Fadengruppe in einer dritten Fadenausrichtung orientiert ist. Die dritte Fadenausrichtung steht in einem ersten Winkel 17 zur ersten Fadenausrichtung und zur zweiten Fadenausrichtung. Der erste Winkel 17 beträgt bevorzugt 45°. Die vierte Lage weist eine vierte Fadengruppe 15 mit einer vierten Fadenausrichtung auf. Die vierte Fadenausrichtung bildet bevorzugt mit der ersten Fadenausrichtung und der zweiten Fadenausrichtung einen zweiten Winkel 18, wobei der zweite Winkel 18 bevorzugt -45° beträgt. Die dritte Fadenausrichtung und die vierte Fadenausrichtung bilden bevorzugt miteinander einen dritten Winkel 16. Der dritte Winkel 16 beträgt bevorzugt 90°.

Es versteht sich, dass die Vorzeichen vor den genannten Winkeln nur der Unterscheidung dienen. Die Winkel, die zwischen der ersten Fadengruppe 12 und der dritten Fadengruppe 14 beziehungsweise zwischen der zweiten Fadengruppe 13 und der dritten Fadengruppe 14 gebildet werden, sind vom Betrag her gleich. Es wird deswegen auch nur von einem ersten Winkel 17 berichtet. Ebenso sind die Winkel, die zwischen der ersten Fadengruppe 12 und der vierten Fadengruppe 15 und der zweiten Fadengruppe 13 und der vierten Fadengruppe 15 gebildet werden vom Betrag her gleich, weswegen nur von einem zweiten Winkel 18 berichtet wird.

Weiterhin soll klar sein, dass die zweite Fadengruppe 13 einen weiteren Winkel 19 mit der vierten Fadengruppe 15 einschließt. Ebenso schließt die erste Fadengruppe 12 einen weiteren Winkel mit der vierten Fadengruppe 15 ein, wobei auch hier der Betrag der beiden Winkel gleich ist, weswegen auch nur von einem weiteren Winkel 19 berichtet werden könnte. Bezüglich des weiteren Winkels gelten die gleichen Ausführungen für weitere mögliche Winkel zwischen der ersten Fadengruppe 12 und der dritten Fadengruppe 14 und der zweiten Fadengruppe 13 und der dritten Fadengruppe 14.

### Beispiel 1

Für das Beispiel 1 wurden drei unterschiedliche Pakettypen aus einem Abstand von jeweils 10 Metern mit der Munition .357 Magnum (Remington 158 gr.) beschossen. Für jeden Pakettyp wurden zwei Pakete gebildet und jeweils achtmal beschossen. Die Geschossgeschwindigkeit v _{2,5} (Geschwindigkeit des Geschosses zwischen zwei Lichtschranken, wobei die Mitte der Lichtschranken 2,5 m von der Mündung entfernt war) betrug für alle Geschosse in etwa 435 m/s. Für die Beschussversuche wurde eine PE-Schaumlage auf der der Bedrohungsseite abgewandten Seite der Pakete angeordnet. Die PE-Schaumlage war 3 mm dick und hatte ein Flächengewicht von 100 g/m². Hinter jedem Paket mit Schaumlage, also von der Bedrohungsseite abgewandt, war ein 40 cm x 40 cm Weible-Plastilin-Block angeordnet. Zur Traumabestimmung wurde die Eindelltiefe nach Beschuss im Plastilin-Block gemessen. In der Tabelle 1 wird für jeden Pakettyp der Mittelwert der entstandenen Eindelltiefen aus den jeweils acht Schüssen pro Paket angegeben.

### Pakettyp 1

Jedes Paket des Pakettyps 1 wurde aus neun Einheiten gebildet. Jede Einheit war wie folgt aufgebaut:
▪ thermoplastischer Film aus Polyethylenfolie (LDPE) mit einer Dicke von 11 µm
▪ erste Gewebelage (0°-Ausrichtung der Twaron®-Fäden)
▪ thermoplastischer Film (Polyethylenfolie (LDPE), Dicke 11 µm)
▪ zweite Gewebelage (90° Ausrichtung der Twaron®-Fäden zur 0°-Ausrichtung der Twaron®-Fäden der ersten Gewebelage)
▪ thermoplastischer Film (Polyethylenfolie (LDPE), Dicke 11 µm)
▪ erste Gelegelage (+45° Ausrichtung der Twaron®-Fäden zur 0°-Ausrichtung der Twaron®-Fäden der ersten Gewebelage )
▪ thermoplastischer Film (Polyethylenfolie (LDPE), Dicke 11 µm)
▪ zweite Gelegelage (-45° Ausrichtung der Twaron®-Fäden zur 0°-Ausrichtung der Twaron®-Fäden der ersten Gewebelage)
▪ thermoplastischer Film (Polyethylenfolie (LDPE), Dicke 11 µm)

Jede Gewebelage wurde aus Twaron®-Fäden (Typ 2040 930 dtex f1000) und Trevira®-Fäden (710, 140 dtex, Hoechst) gewebt. Die Gewebelagen wiesen eine 1/1 Leinwandbindung auf. In der ersten Gewebelage lagen die Twaron®-Fäden in Kettrichtung (9,5 Fäden/cm) und die Trevira®-Fäden (2 Fäden/cm) in Schussrichtung vor. In der zweiten Gewebelage lagen die Trevira®-Fäden (4 Fäden/cm) in Kettrichtung und die Twaron®-Fäden (9,5 Fäden/cm) in Schussrichtung vor. Die erste und die zweite Gewebelage wurden so zueinander angeordnet, dass die Twaron®-Fäden der beiden Gewebelagen einen Winkel von 90° zueinander hatten. Die erste Gewebelage, die zweite Gewebelage und der thermoplastische Film zwischen den beiden Gewebelagen bilden zusammen eine erste Komponente.

Jede der beiden Gelegelagen bestanden aus unidirectional und parallel zueinander angeordneten Twaron® -Fäden (Typ 2040 930 dtex f1000 Flächengewicht einer Lage 96 g/m²). Die beiden Gelegelagen wurden in den Paketen des ersten Pakettyps so zueinander angeordnet, dass die jeweiligen Twaron® -Fäden jeder Gelegelage einen Winkel von 90° bildeten. Die beiden Gelegelagen und der thermoplastische Film zwischen den beiden Gelegelagen wurden durch Wirkfäden miteinander verbunden. Als Wirkfaden wurde ein texturierter Polyesterfaden verwendet ( 76 dtex, f24). Zusätzlich wurden die beiden Gelegelagen durch Stabilisierungsfäden (0,1 Faden/cm) stabilisiert. Die Stabilisierungsfäden liefen parallel zu den Twaron®-Fäden der ersten Gewebelage (0°-Ausrichtung) und wiesen einen Abstand von etwa 10 cm zueinander auf. Als Stabilisierungsfäden wurden Twaron®-Fäden (Typ 2040, 930 dtex, f1000) verwendet. Beide Gelegelagen wurden so in den Paketen des Pakettyps 1 angeordnet, dass die Twaron® -Fäden der Gelegelagen einen Winkel von ± 45° zu den Twaron® -Fäden der Gewebelagen bildeten. Die beiden Gelegelagen, der thermoplastische Film zwischen den Gelegelagen, die Wirkfäden und die Stabilisierungsfäden bilden eine zweite Komponente.

Die neun Einheiten wurden aufeinander gestapelt, wobei jede Einheiten durch ein Trennpapier von der nächsten Einheit getrennt wurde. Die neun Einheiten wurden dann bei 120 °C für 25 Minuten auf einer statischen Presse bei einem Druck von 25 bar verpresst, anschließend wurde die Heizung der Presse ausgeschaltet. Durch das Trennpapier wurde verhindert, dass die Einheiten miteinander verbunden wurden.

Die verpressten Einheiten wurden zur Bildung der Pakete des Pakettyps 1 so aufeinander gestapelt, dass die Twaron®-Fäden der ersten Lage stets in 0° Richtung lagen. Zur Verbindung der jeweils neun Einheiten für die Pakete des Pakettyps 1 wurden alle neun Einheiten untereinander in den Eckbereichen zusammengenäht. Als Nähgarn wurde Twaron® (Typ 2000 840dtex f1000 z160) verwendet.

### Pakettyp 2 (Vergleichsbeispiel)

Jedes Paket des Pakettyps 2 wurde aus achtzehn zweiten Komponenten und zusätzlicher Polyethylenfolie (LDPE, Dicke 11 µm) gebildet. Auf jede zu verwendende zweite Komponente und unter jeder zweiten Komponente wurde jeweils eine Polyethylenfolie gelegt, wobei auch hier die einzelnen zweiten Komponenten (mit Polyethylenfolien) durch Trennpapier voneinander getrennt waren. Alle zweiten Komponenten mit zusätzlichen Polyethylenfolien für ein Paket wurden bei 120 °C für 25 Minuten auf einer statischen Presse bei einem Druck von 25 bar verpresst, anschließend wurde die Heizung der Presse ausgeschaltet. Durch das Trennpapier wurde verhindert, dass die zweiten Komponenten miteinander verbunden wurden. Jeweils achtzehn Teile des so entstandenen verpressten Materials wurden zur Bildung der Pakete des Pakettyps 2 so aufeinander gestapelt, dass die Fadengruppen benachbarter Lagen einen Winkel von etwa 90° zueinander bildeten. Die achtzehn aufeinander gelegten Lagen wurden in den Eckbereichen zusammengenäht. Als Nähgarn wurde Twaron® (Typ 2000 840dtex,f1000, z160) verwendet.

### Pakettyp 3 (Vergleichsbeispiel)

Jedes Paket des Pakettyps 3 wurde aus achtzehn ersten Komponenten gebildet. Auf und unter jeder der ersten Komponenten wurde eine zusätzliche Polyethylenfolie (LDPE, Dicke 11 µm) gelegt. Alle ersten Komponenten mit zusätzlicher Polyethylenfolie (Gebilde) für ein Paket des Pakettyps 3 wurden aufeinandergestapelt, wobei die einzelnen Gebilde durch Trennpapiere voneinander getrennt waren. Die Verpressung erfolgte bei 120 °C für 25 Minuten auf einer statischen Presse bei einem Druck von 25 bar, anschließend wurde die Heizung der Presse ausgeschaltet. Für ein Paket des Pakettyps 3 wurden achtzehn Gebilde aufeinander gelegt, wobei jeweils die Twaron®-Fäden der ersten Lage in 0° Richtung orientiert wurden. Zur Bildung der zwei Pakete des Pakettyps 3 wurden alle achtzehn Gebilde in den Eckbereichen miteinander vernäht. Als Nähgarn wurde Twaron® (Typ 2000 840 dtex,f1000, z160) verwendet.

**Tabelle 1**

| Pa kettyp | Trauma (mm) |
|---|---|
| Pakettyp 1 | 29 |
| Pakettyp 2 (Vergleichsbeispiel) | 38 |
| Pakettyp 3 (Vergleichsbeispiel) | 41 |

Wie aus Tabelle 1 ersichtlich weist der erste Pakettyp aus dem erfindungsgemäßen durchdringungshemmenden Material ein deutlich geringeres Trauma (Hintergrunddeformation) auf, als die Pakettypen der Vergleichsbeispiele 2 und 3. Das Trauma konnte überraschender Weise bei gleicher Anzahl von Fadenlagen und etwa gleichem Paketgewicht der Pakete des ersten Pakettyps im Vergleich zu den Paketen der Pakettypen zwei und drei um etwa 30% reduziert werden. Die Erzielung einer solchen Verbesserung aufgrund der Kombination zweier Komponenten mit unterschiedlichen Fadenlagen war überraschend und nicht vorherzusehen. Ein weiterer Vorteil des Pakettyps 1 besteht darin, das für die Herstellung der Pakete des Pakettyps 1 wenig Konfektionsabfall produziert wird. Würden die Pakete des Pakettyps 1 durch nur eine Komponente hergestellt werden, so müsste die erste oder die zweite Komponente zur Erreichung der gleichen Fadenausrichtung der vier Fadengruppen im durchdringungshemmenden Material um etwa 45° gedreht werden, wodurch unnötig viel Konfektionsabfall anfallen würde.

### Beispiel 2

Für das Beispiel 2 werden zwei Pakettypen (Pakettyp 4 und Pakettyp 5), gebildet aus jeweils einem Paket, nach der Norm NIJ 0101.04 (Klasse III-A) mit .44 Magnum JHP (Remington, 240 gr.) aus einem Abstand von 5 Metern jeweils sechsmal beschossen. Hinter jedes Paket wird eine 3 mm dicke PE-Schaumlage angeordnet. Hinter Paket und Schaumlage (also von der Bedrohungsseite abgewandt) wird ein Roma-Plastilin-Block angeordnet, um die Hintergrunddeformation (Trauma) zu bestimmen. Zur Traumabestimmung wird die Eindelltiefe im Plastilin-Block ausgemessen. Gemessen wurde auch die Geschossgeschwindigkeit, die in der Tabelle 2 angegeben wird.

### Pakettyp 4 (Vergleichsbeispiel)

Das Paket des Pakettyps 4 war aufgebaut aus 22 ersten Komponenten, wobei auf jede und unter jede erste Komponente ein thermoplastischer Film (LDPE, Dicke 11 µm) gelegt wurde. Die so entstandenen 22 Gebilde wurden aufeinander gestapelt, wobei die einzelnen Gebilde (Komponente 1 zwischen zwei thermoplastischen Filmen) innerhalb des Stapels durch Trennpapier voneinander getrennt waren. Die Gebilde wurden dann bei 120 °C für 25 Minuten auf einer statischen Presse bei einem Druck von 25 bar verpresst, anschließend wurde die Heizung der Presse ausgeschaltet. Durch das Trennpapier wurde verhindert, dass die 22 Gebilde durch den Film miteinander verbunden wurden. Nach dem Verpressen wurden die Gebilde so aufeinander angeordnet, das die Twaron®-Fäden benachbarter Lagen einen Winkel von etwa 90° zueinander hatten. Anschließend wurden die Gebilde in den Eckbereichen zusammengenäht, um ein Paket des Pakettyps 4 zu bilden. Als Nähgarn wurde Twaron® (Typ 2000 840 dtex f1000, z160) verwendet. Das Flächengewicht des vierten Pakettyps betrug in etwa 4900 g/m².

### Pakettyp 5 (Vergleichsbeispiel)

Das Paket des Pakettyps 5 wurde aus 11 Elementen gebildet, wobei jedes Element zwei erste Komponenten mit zusätzlichem thermoplastischem Film dazwischen umfasste. Jedes dieser 11 Elemente wurde wie folgt aufgebaut:
▪ thermoplastischer Film aus Polyethylenfolie (LDPE) mit einer Dicke von 11 µm
▪ erste Gewebelage (0°-Ausrichtung der Twaron®-Fäden, Trevira®-Fäden liegen in Schussrichtung)
▪ thermoplastischer Film (Polyethylenfolie (LDPE), Dicke 11 µm)
▪ zweite Gewebelage (90° Ausrichtung der Twaron®-Fäden zur 0°-Ausrichtung der Twaron®-Fäden der ersten Gewebelage )
▪ thermoplastischer Film (Polyethylenfolie (LDPE), Dicke 11 µm)
▪ erste Gewebelage (0°-Ausrichtung der Twaron®-Fäden)
▪ thermoplastischer Film (Polyethylenfolie (LDPE), Dicke 11 µm)
▪ zweite Gewebelage (90° Ausrichtung der Twaron®-Fäden zur 0°-Ausrichtung der Twaron®-Fäden der ersten Gewebelage)
▪ thermoplastischer Film (Polyethylenfolie (LDPE), Dicke 11 µm)

Die 11 Elemente wurden zu einem Stapel aufeinander gelegt, wobei jedes Element durch Trennpapier von benachbarten Elementen getrennt war. Es folgte eine Verpressung der Elemente bei 120 °C für 25 Minuten auf einer statischen Presse bei einem Druck von 25 bar, anschließend wurde die Heizung der Presse ausgeschaltet. Anschließend wurden die verpressten Elemente so aufeinandergestapelt und in den Eckbereichen miteinander vernäht, dass die Twaron®-Fäden von Lagen benachbarter Elemente einen Winkel von 90° zueinander hatten. Als Nähgarn wurde Twaron® (Typ 2000 840 dtex f1000, z160) verwendet. Das Flächengewicht eines solchen Pakets betrug in etwa 4700 g/m².

**Tabelle 2**

| | V (m/s) | Trauma (mm) |
|---|---|---|
| Pakettyp 4 | 442 | 57 |
| | 443 | 52 |
| | 443 | 48 |
| Pakettyp 5 | 443 | 59 |
| | 442 | 56 |
| | 444 | 56 |

Aus Tabelle 2 wird deutlich, dass die Pakettypen 4 und 5 bei gleicher Anzahl von Gewebelagen und etwa gleichem Flächengewicht etwa gleiche Traumawert aufwiesen, obwohl im Pakettyp 5 jeweils vier Gewebelagen und im Pakettyp 4 nur zwei Gewebelagen vollflächig durch einen thermoplastischen Film miteinander verbunden wurden.

Auf Grund der Ergebnisse aus dem Beispiel 1 und dem Beispiel 2 wird deutlich, dass die guten Traumawerte des Pakettyps 1 nicht aus der Verbindung der vier Lagen miteinander resultiert, sondern auf die Wahl der Lagen und die Ausrichtung der Lagen innerhalb des Pakettyps 1 zurückzuführen sind.

### Bezugszeichenliste

- 1: erste Lage
- 2: zweite Lage
- 3: dritte Lage
- 4: vierte Lage
- 7: Außenlage
- 8: viertes Bindemittel
- 9: drittes Bindemittel
- 10: zweites Bindemittel
- 11: Außenlage
- 12: erste Fadengruppe
- 13: zweite Fadengruppe
- 14: dritte Fadengruppe
- 15: vierte Fadengruppe
- 16: fünfte Fadengruppe
- 17: erster Winkel
- 18: zweiter Winkel
- 19: weiterer Winkel

## Patentansprüche

1. Durchdringungshemmendes Material, umfassend mindestens eine erste Komponente, wobei die erste Komponente mindestens eine erste Lage (1) mit einer ersten Fadengruppe (12) und eine zweite Lage (2) mit einer zweiten Fadengruppe (13) aufweist, wobei die erste Fadengruppe (12) in einer ersten Fadenausrichtung orientiert ist und die zweite Fadengruppe (13) in einer zweiten Fadenausrichtung orientiert ist, wobei die erste Fadenausrichtung quer zu der zweiten Fadenausrichtung ist, und wobei das
durchdringungshemmende Material mindestens eine zweite Komponente aufweist, wobei die zweite Komponente mindestens eine dritte Lage (3) und eine vierte Lage (4) aufweist, wobei die dritte Lage (3) eine dritte Fadengruppe (14) aufweist und die vierte Lage (4) eine vierte Fadengruppe (15) aufweist, wobei die dritte Fadengruppe (14) in einer dritten Fadenausrichtung orientiert ist und die vierte Fadengruppe (15) in einer vierten Fadenausrichtung orientiert ist, und wobei die dritte Fadenausrichtung quer zu der vierten Fadenausrichtung ist, wobei die dritte Fadenausrichtung einen ersten Winkel (17) zu der ersten und zu der zweiten Fadenausrichtung bildet und die vierte Fadenausrichtung einen zweiten Winkel (18) zu der ersten Fadenausrichtung und zu der zweiten Fadenausrichtung bildet, und wobei die dritte Fadengruppe (14) und die vierte Fadengruppe (15) über mindestens ein erstes Bindemittel miteinander verbunden, und wobei die erste Fadengruppe (12) und die zweite Fadengruppe (13) durch ein zweites Bindemittel (10) miteinander verbunden sind und bei dem die erste Komponente und die zweite Komponente durch ein drittes Bindemittel (9) miteinander verbunden sind, **dadurch gekennzeichnet, dass** die dritte Lage (3) und die vierte Lage (4) Gelegelagen sind und das erste Bindemittel ein textiles Bindemittel ist.

2. Durchdringungshemmendes Material nach Anspruch 1, bei dem die dritte Fadengruppe (14) und die vierte Fadengruppe (15) mit einem vierten Bindemittel (8) verbunden sind.

3. Durchdringungshemmendes Material nach Anspruch 1 oder 2, bei dem das erste Bindemittel und/oder das zweite Bindemittel (10) mindestens ein Faden ist.

4. Durchdringungshemmendes Material nach mindestens einem der Ansprüche 1 bis 3, bei dem das zweite Bindemittel (10) und/oder das dritte Bindemittel (9) und/oder das vierte Bindemittel (8) ein adhäsives Material ist.

5. Durchdringungshemmendes Material nach Anspruch 4, bei dem das adhäsive Material ein thermoplastisches oder elastomeres oder duroplastisches Material ist.

6. Durchdringungshemmendes Material nach Anspruch 3 bei dem der mindestens eine Faden ein Wirkfaden ist.

7. Durchdringungshemmendes Material nach einem oder mehreren der vorhergehenden Ansprüche, bei dem die erste Lage (1) weiterhin eine fünfte Fadengruppe (16) aufweist, wobei die fünfte Fadengruppe (16) mit der ersten Fadengruppe (12) verwebt ist.

8. Durchdringungshemmendes Material nach einem oder mehreren der vorhergehenden Ansprüche, bei dem die zweite Lage (2) weiterhin eine sechste Fadengruppe aufweist, wobei die sechste Fadengruppe mit der zweiten Fadengruppe (13) verwebt ist.

9. Durchdringungshemmendes Material nach einem oder mehreren der vorhergehenden Ansprüche, bei dem die erste Fadengruppe (12), die zweite Fadengruppe (13), die dritte Fadengruppe (14) und die vierte Fadengruppe (15) ausgewählt sind aus Aramid-, Polyethylen-, Polypropylen- und Poly-p-phenylenbenzobisoxazol- (PBO) Fasern.

10. Durchdringungshemmendes Material nach den Ansprüchen 7 und 8, bei dem die erste Fadengruppe(12), die zweite Fadengruppe (13), die dritte Fadengruppe (14) und die vierte Fadengruppe (15) Fäden mit einem Titer größer 200 dtex aufweisen und die fünfte Fadengruppe (16) und die sechste Fadengruppe Fäden mit einem Titer größer 50 dtex aufweisen.

11. Durchdringungshemmendes Material nach einem der Ansprüche 7 bis 10, bei dem die fünfte Fadengruppe (16) in einer fünften Fadenausrichtung orientiert ist, wobei die fünfte Fadenausrichtung parallel zur zweiten Fadenausrichtung ist.

12. Durchdringungshemmendes Material nach einem der Ansprüche 8 bis 11, bei dem die sechste Fadengruppe in einer sechste Fadenauslrichtung orientiert ist, wobei die sechste Fadenausrichtung parallel zur ersten Fadenausrichtung ist.

13. Durchdringungshemmendes Material nach einem der Ansprüche 8 bis 12, bei dem die erste Fadengruppe (12), die zweite Fadengruppe (13), die dritte Fadengruppe (14) und die vierte Fadengruppe (15) aus Aramidfäden und die fünfte Fadengruppe (16) und die sechste Fadengruppe aus Polyesterfäden bestehen.

## Claims

1. A penetration-inhibiting material which comprises at least a first component, wherein the first component has at least a first layer (1) with a first set of threads (12) and a second layer (2) with a second set of threads (13), wherein the first set of threads (12) is oriented in a first thread direction and the second set of threads (13) is oriented in a second thread direction, wherein the first thread direction is transverse to the second thread direction, and wherein the penetration-inhibiting material has at least a second component, wherein the second component has at least a third layer (3) and a fourth layer (4), wherein the third layer (3) has a third set of threads (14) and the fourth layer (4) has a fourth set of threads (15), wherein the third set of threads (14) is oriented in a third thread direction and the fourth set of threads (15) is oriented in a fourth thread direction, and wherein the third thread direction is transverse to the fourth thread direction, wherein the third thread direction forms a first angle (17) to the first thread direction and to the second thread direction, and the fourth thread direction forms a second angle (18) to the first thread direction and to the second thread direction, and wherein the third set of threads (14) and the fourth set of threads (15) are joined to one another using at least a first binding agent, and wherein the first set of threads (12) and the second set of threads (13) are joined to one another by a second binding agent (10), and in which the first component and the second component are joined to one another by a third binding agent (9), **characterized in that** the third layer (3) and the fourth layer (4) are thread layers and the first binding agent is a textile binding agent.

2. Penetration-inhibiting material according to Claim 1, in which the third set of threads (14) and the fourth set of threads (15) are joined by a fourth binding agent (8).

3. Penetration-inhibiting material according to Claim 1 or 2, in which the first binding agent and/or the second binding agent (10) is at least one thread.

4. Penetration-inhibiting material according to at least one of Claims 1 to 3, in which the second binding agent (10) and/or the third binding agent (9) and/or the fourth binding agent (8) is an adhesive material.

5. Penetration-inhibiting material according to Claim 4, in which the adhesive material is a thermoplastic, an elastomeric, or a duroplastic material.

6. Penetration-inhibiting material according to Claim 3, in which the at least one thread is a knitting thread.

7. Penetration-inhibiting material according to one or more of the previous claims, in which the first layer (1) has an additional fifth set of threads (16), wherein the fifth set of threads (16) is woven with the first set of threads (12).

8. Penetration-inhibiting material according to one or more of the previous claims, in which the second layer (2) has an additional sixth set of threads, wherein the sixth set of threads is woven with the second set of threads (13).

9. Penetration-inhibiting material according to one or more of the previous claims, in which the first set of threads (12), the second set of threads (13), the third set of threads (14), and the fourth set of threads (15) are selected from fibers made from aramid, polyethylene, polypropylene, and poly-p-phenylenebenzobisoxazole (PBO).

10. Penetration-inhibiting material according to Claims 7 and 8, in which the first set of threads (12), the second set of threads (13), the third set of threads (14), and the fourth set of threads (15) have threads with a linear density greater than 200 dtex, and the fifth set of threads (16) and the sixth set of threads have threads with a linear density greater than 50 dtex.

11. Penetration-inhibiting material according to one of Claims 7 to 10, in which the fifth set of threads (16) is oriented in a fifth thread direction, wherein the fifth thread direction is parallel to the second thread direction.

12. Penetration-inhibiting material according to one of Claims 8 to 11, in which the sixth set of threads is oriented in a sixth thread direction, wherein the sixth thread direction is parallel to the first thread direction.

13. Penetration-inhibiting material according to one of Claims 8 to 12, in which the first set of threads (12), the second set of threads (13), the third set of threads (14), and the fourth set of threads (15) consist of aramid threads, and the fifth set of threads (16) and the sixth set of threads consist of polyester threads.

## Revendications

1. Matériau anti-pénétration comprenant au moins un premier composant, le premier composant présentant au moins une première couche (1) dotée d'un premier groupe de fils (12) et une deuxième couche (2) dotée d'un deuxième groupe de fils (13), le premier groupe de fils (12) étant orienté dans une première direction de fils et le deuxième groupe de fils (13) étant orienté dans une deuxième direction de fils, la première direction de fils étant orientée transversalement à la deuxième direction de fils, et le matériau anti-pénétration présentant au moins un deuxième composant, le deuxième composant présentant au moins une troisième couche (3) et une quatrième couche (4), la troisième couche (3) présentant un troisième groupe de fils (14) et la quatrième couche (4) présentant un quatrième groupe de fils (15), le troisième groupe de fils (14) étant orienté dans une troisième direction de fils et le quatrième groupe de fils (15) étant orienté dans une quatrième direction de fils, et la troisième direction de fils étant transversale par rapport à la quatrième direction de fils, la troisième direction de fils formant un premier angle (17) par rapport à la première direction de fils et par rapport à la deuxième direction de fils et la quatrième direction de fils formant un deuxième angle (18) par rapport à la première direction de fils et à la deuxième direction de fils, et le troisième groupe de fils (14) et le quatrième groupe de fils (15) étant reliés l'un à l'autre par au moins un premier moyen de liaison, et le premier groupe de fils (12) et le deuxième groupe de fils (13) étant reliés l'un à l'autre par un deuxième moyen de liaison (10) et le premier composant et le deuxième composant étant reliés l'un à l'autre par un troisième moyen de liaison (9),
**caractérisé en ce que** la troisième couche (3) et la quatrième couche (4) sont des couches résultant d'un dépôt et **en ce que** le premier moyen de liaison est un moyen de liaison textile.

2. Matériau anti-pénétration selon la revendication 1 dans lequel le troisième groupe de fils (14) et le quatrième groupe de fils (15) sont reliés par un quatrième moyen de liaison (8).

3. Matériau anti-pénétration selon la revendication 1 ou 2 dans lequel le premier moyen de liaison et/ou le deuxième moyen de liaison (10) est au moins un fil.

4. Matériau anti-pénétration selon au moins une des revendications 1 à 3 dans lequel le deuxième moyen de liaison (10) et/ou le troisième moyen de liaison (9) et/ou le quatrième moyen de liaison (8) est un matériau adhésif.

5. Matériau anti-pénétration selon la revendication 4 dans lequel le matériau adhésif est un matériau thermoplastique, ou un matériau élastomère, ou un matériau thermodurcissable.

6. Matériau anti-pénétration selon la revendication 3 dans lequel le fil au minimum unique est un fil de tricotage.

7. Matériau anti-pénétration selon une ou plusieurs des revendications qui précèdent dans lequel la première couche (1) présente en outre un cinquième groupe de fils (16), le cinquième groupe de fils (16) étant tissé avec le premier groupe de fils (12).

8. Matériau anti-pénétration selon une ou plusieurs des revendications qui précèdent dans lequel la deuxième couche (2) présente en outre un sixième groupe de fils, le sixième groupe de fils étant tissé avec le deuxième groupe de fils (13).

9. Matériau anti-pénétration selon une ou plusieurs des revendications qui précèdent dans lequel le premier groupe de fils (12), le deuxième groupe de fils (13), le troisième groupe de fils (14) et le quatrième groupe de fils (15) sont choisis parmi les fibres d'aramide, de polyéthylène, de polypropylène et de poly-p-phénylbenzobisoxazol (PBO).

10. Matériau anti-pénétration selon les revendications 7 et 8 dans lequel le premier groupe de fils (12), le deuxième groupe de fils (13), le troisième groupe de fils (14) et le quatrième groupe de fils (15) présentent des fils qui ont un titre supérieur à 200 dtex et le cinquième groupe de fils (16) et le sixième groupe de fils présentent des fils qui ont un titre supérieur à 50 dtex.

11. Matériau anti-pénétration selon une des revendications 7 à 10 dans lequel le cinquième groupe de fils (16) est orienté dans une cinquième direction de fils, la cinquième direction de fils étant parallèle à la deuxième direction de fils.

12. Matériau anti-pénétration selon une des revendications 8 à 11 dans lequel le sixième groupe de fils est orienté dans une sixième direction de fils, la sixième direction de fils étant parallèle à la première direction de fils.

13. Matériau anti-pénétration selon une des revendications 8 à 12 dans lequel le premier groupe de fils (12), le deuxième groupe de fils (13), le troisième groupe de fils (14) et le quatrième groupe de fils (15) sont constitués de fils d'aramide et le cinquième groupe de fils (16) ainsi que le sixième groupe de fils sont constitués de fils de polyester.
